# EUROPÄISCHE PATENTSCHRIFT

(11) **EP 0 925 447 B1**
(45) Veröffentlichungstag und Bekanntmachung des Hinweises auf die Patenterteilung: **01.10.2003**
(21) Anmeldenummer: 98942486.6
(22) Anmeldetag: 02.07.1998
(51) Int. Cl.: F04B 1/04, F02M 63/02, F04B 53/16, F16J 15/08

(54) **RADIALKOLBENPUMPE ZUR KRAFTSTOFFHOCHDRUCKVERSORGUNG**
RADIAL PISTON PUMP FOR HIGH PRESSURE FUEL SUPPLY
POMPE A PISTONS RADIAUX POUR L'ALIMENTATION HAUTE PRESSION EN CARBURANT

(30) Priorität: 11.07.1997 DE 19729788
(43) Veröffentlichungstag der Anmeldung: 30.06.1999
(73) Patentinhaber: ROBERT BOSCH GMBH, 70442 Stuttgart (DE)
(72) Erfinder: STREICHER, Bernd, D-70794 Filderstadt (DE)
(86) Internationale Anmeldenummer: DE9801829
(87) Internationale Veröffentlichungsnummer: WO99002860

(56) Entgegenhaltungen:
- DE-A- 4 213 781
- DE-A- 4 324 689
- DE-C- 921 903
- FR-A- 2 524 113
- US-A- 3 501 158
- US-A- 5 058 906
- US-A- 5 571 243

## Beschreibung

Die Erfindung betrifft eine Radialkolbenpumpe zur Kraftstoffhochdruckversorgung bei Kraftstoffeinspritzsystemen von Brennkraftmaschinen, insbesondere bei einem Common-Rail-Einspritzsystem, mit einer in einem Pumpengehäuse gelagerten Antriebswelle, die exzentrisch ausgebildet ist oder in Umfangsrichtung mehrere nockenartige Erhebungen aufweist, und mit vorzugsweise mehreren bezüglich der Antriebswelle radial in einem jeweiligen Zylinderraum angeordneten Kolben, die bei Umdrehen der Antriebswelle in dem Zylinderraum in radialer Richtung hin- und herbewegbar sind, und mit Rückschlagventilen auf der Ansaugseite und der Hochdruckseite, wobei für jeden Kolben ein den jeweiligen Zylinderraum bildendes metallisches Gehäuseteil mit einer Kraftstoffzuführöffnung und einer Kraftstoffabführöffnung vorgesehen ist.

Bei derartigen Radialkolbenpumpen ist das Gehäuseteil über eine Anzahl von elastomeren Dichtungselementen gegen andere Gehäusebereiche abgestützt und abgedichtet. Dies führt zu einer undefinierten Anordnung der Bauteile der Pumpe.

Aus der DE 42 13 781 A1 und der US 5,571,243 Kraftstoffhochdruckpumpen bekannt bei denen das Hochdruckdichtelement mehrteilig ausgeführt ist. Das Hochdruckdichtelement besteht aus einer Hülse mit zwei Absätzen und zwei Dichtringen, die auf diese Absätze aufgeschoben werden. In montierten Zustand stützen sich die Dichtringe in radialer Richtung einerseits gegen die Hülse und andererseits gegen einen erweiterten Mündungsbereich einer Kraftstoffabführöffnung im Gehäuseteil oder im Gehäusegrundkörper ab. Die Belastbarkeit dieses Hochdruckdichtelements ist wegen der Verwendung weicher Dichtringe beschränkt.

Hiervon ausgehend liegt der vorliegenden Erfindung die Aufgabe zugrunde, eine bis 200 MPa (2000 bar) hochdruckdichte Radialkolbenpumpe zu schaffen, bei der die hochdruckbeaufschlagten Bauteile und deren Dichtstellen voneinander entkoppelt und im montierten Zustand statisch exakt definiert sind.

Diese Aufgabe wird bei einer Radialkolbenpumpe der eingangs beschriebenen Art erfindungsgemäß dadurch gelöst, dass die Kraftstoffabführöffnung und die weitere Abführöffnung fluchtend angeordnet sind, dass das Hochdruckdichtelement als metallisches Hochdruckdichtelement ausgeführt ist, und dass das Gehäuseteil unter Zwischenordnung des metallischen Hochdruckdichtelements über Schrauben derart gegen den Gehäusegrundkörper angezogen ist, dass durch Klemmung des Hochdruckdichtelements eine Abdichtung der Hochdruckseite erreicht wird.

Während bei der vorbekannten Radialkolbenpumpe auch die Hochdruckabdichtung über elastomere zwischengeordnete Dichtungselemente erreicht wurde und die Montage der die Hochdruckseite begrenzenden Komponenten - wie eingangs erwähnt - einen Kraftfluss über mehrere Komponenten umfasste, was zu einer statischen Unbestimmtheit führte, wird mit der Erfindung vorgeschlagen, die Abdichtung über das Hochdruckdichtelement und dadurch, dass die ebenen metallischen Anlageflächen des jeweiligen- radial äußeren Gehäuseteils und des Gehäusegrundkörpers, die gegeneinander angezogen werden, zu bewirken. Das Gehäuseteil kann statisch genau bestimmt über die ebenen Anlageflächen an den Gehäusegrundkörper anliegen. Beim Anziehen des Gehäuseteils gegen den Gehäusegrundkörper erfolgt eine sog. harte Abdichtung der Hochdruckseite durch das metallische Hochdruckdichtelement, welches die Abführöffnung in dem Gehäuseteil und die weitere Abführöffnung in dem Gehäusegrundkörper durchströmbar und nach außen abgedichtet miteinander verbindet.

Die mit Hochdruck beaufschlagten Dichtstellen von gegeneinander angezogenen metallischen Bauteilen könnten auch ohne Zwischenordnung zusätzlicher Hochdruckdichtungselemente gebildet sein. Hierfür könnten die Oberflächen der dichtend gegeneinander anliegenden metallischen Bauteile bearbeitet, insbesondere geläppt werden, um eine erwünschte Ebenheit und Oberflächenrauhigkeit zu erzeugen. Durch Anziehen der Bauteile gegeneinander kann dann ebenfalls eine harte Abdichtung (Metall auf Metall) erreicht werden. Wenn das Läppen nur schwer oder gar nicht durchführbar ist, weil ein betreffendes Bauteil einen vorspringenden Zapfen o.dgl. aufweist oder wenn auf den Bearbeitungsschritt des Läppens verzichtet werden soll, so kann eine zur Ausbildung einer harten Abdichtung ausreichende Oberflächenbeschaffenheit auch durch Hartdrehen, d.h. spanabhebende Bearbeitung nach der Wärmeaushärtung, erreicht werden. Wenn nach der vorliegenden Erfindung aber ein metallisches Hochdruckdichtelement in der beschriebenen Weise verwendet wird, so ist der Bearbeitungsaufwand sehr viel geringer und die Pumpe daher kostengünstiger herstellbar. Außerdem werden größere Fertigungstoleranzen am Gehäuseteil und am Gehäusegrundkörper möglich, ohne dass Undichtigkeiten auftreten.

Nach einer bevorzugten Ausführungsform der Erfindung handelt es sich bei dem Hochdruckdichtelement um ein Doppelkegeldichtelement. Das Doppelkegeldichtelement ist dann vorzugsweise derart in dem erweiterten Mündungsbereich der Kraftstoffabführöffnung in dem Gehäuseteil und/oder im Gehäusegrundkörper aufgenommen, dass die Umfangskanten der jeweiligen Abführöffnung gegen die kegelförmigen Flächen des Doppelkegeldichtelements dichtend anliegen.

Der erweiterte Mündungsbereich kann bspw. in Form einer abgestuften Bohrung im Gehäusegrundkörper oder in dem Gehäuseteil vorgesehen werden. Solchenfalls bildet die vorzugsweise rechtwinklige Stufe die vorstehend erwähnte kreisförmige Kante, welche gegen die kegelförmige Dichtfläche anlegbar ist.

Nach einer anderen Ausführungsform der Erfindung kann das Hochdruckdichtelement ringförmig ausgebildet sein und eine Dichthaube bilden.

Es hat sich desweiteren als vorteilhaft erwiesen, wenn das Hochdruckdichtelement im Wesentlichen buchsenförmig ausgebildet ist und mit seinen Stirnseiten die hochdruckführenden Öffnungen umgebend eine harte Abdichtung bewirkt.

In ganz besonders vorteilhafter Weiterbildung des vorstehend genannten Erfindungsgedankens ist das buchsenförmige Hochdruckdichtelement in axialer Richtung nachgiebig ausgebildet. Dies kann in vorteilhafter Weise dadurch erreicht werden, dass das buchsenförmige Hochdruckdichtelement in seiner inneren und/oder äußeren Fläche in radialer Richtung sowie in Umfangsrichtung erstreckte Ausnehmungen aufweist.

Eine besonders gute und betriebssichere Abdichtung wird erreicht, wenn an den Stirnseiten des Hochdruckdichtelements eine kantige oder sickenförmig umlaufende Erhebung ausgebildet ist. Dies kann bspw. durch zur Längsrichtung leicht abgeschrägt also kegelig verlaufende Stirnflächen bei buchsenförmigen Hochdruckdichtelementen erreicht werden.

Um eine korrekte Montageposition sicherzustellen, hat es sich als vorteilhaft erwiesen, dass der vorspringende antriebswellenzugewandte Abschnitt des Gehäuseteils einen Zentrierbund bildet, mit dem das Gehäuseteil in der radialen Öffnung des Gehäusegrundkörpers positionierbar ist.

Um den beim Verdichtungshub der Pumpenkolben nicht nutzbaren Totraum so klein wie möglich zu halten und damit den Wirkungsgrad der Radialkolbenpumpe zu erhöhen, erweist es sich als vorteilhaft, wenn das ansaugseitige und das hochdruckseitige Rückschlagventil in das jeweilige den Zylinderraum bildende Gehäuseteil integriert sind.

Der Zylinderraum könnte von einer radial nach außen verlaufenden Sacklochbohrung in dem Gehäuseteil gebildet sein. Um die Wandung des Zylinderraums in geeigneter Weise bearbeiten zu können, z.B. zu läppen, erweist es sich indessen als vorteilhaft, wenn das Gehäuseteil eine den Zylinderraum bildende zur Antriebswelle radial verlaufende Durchgangsöffnung aufweist, die radial außen von einem metallischen Verschlusselement, das in die Durchgangsöffnung eingeschraubt ist, verschlossen ist.

Zur Abdichtung der Durchgangsöffnung durch das metallische Verschlusselement wird dieses in vorteilhafter Weise mit seiner Stirnseite gegen eine axiale Stufe in der Durchgangsöffnung derart angezogen, dass eine hochdruckdichte Abdichtung erreicht ist.

In weiterer Ausbildung dieses Erfindungsgedankens ist an der Stirnseite des Verschlusselements eine kantige oder sickenförmige umlaufende Erhebung ausgebildet, die beim Anziehen der Bauteile gegeneinander zu einer dichtenden plastischen Verformung entlang der Erhebung führt. Die Erhebung selbst wird jedoch nicht verformt sondern bildet nur die harte Abdichtung der ebenen Flächen.

Diese als Beißkantentechnik bezeichnete Abdichtung ist nicht auf die Abdichtung der radialen Durchgangsöffnung in dem den Zylinderraum bildenden Gehäuseteil mittels des Verschlusselements beschränkt, sondern auch auf andere Einsatzteile, insbesondere einschraubbare Teile, wie z.B. den Verschluss einer Zugangsöffnung zu einem Rückschlagventil, oder einen einschraubbaren Hochdruckstutzen anwendbar.

Weitere Merkmale, Einzelheiten und Vorteile der Erfindung ergeben sich aus der zeichnerischen Darstellung der nachfolgenden Beschreibung einer bevorzugten Ausführungsform der erfindungsgemäßen Radialkolbenpumpe. In der Zeichnung zeigt:
- Figur 1: eine Draufsicht auf eine Ausführungsform der erfindungsgemäßen Radialkolbenpumpe in Richtung der Antriebswelle;
- Figur 2: einen Längsschnitt entlang der Linie II-II in Figur 1;
- Figur 3: eine Draufsicht auf das radial äußere einen Zylinderraum bildende Gehäuseteil in Richtung der Pfeile III-III in Figur 2;

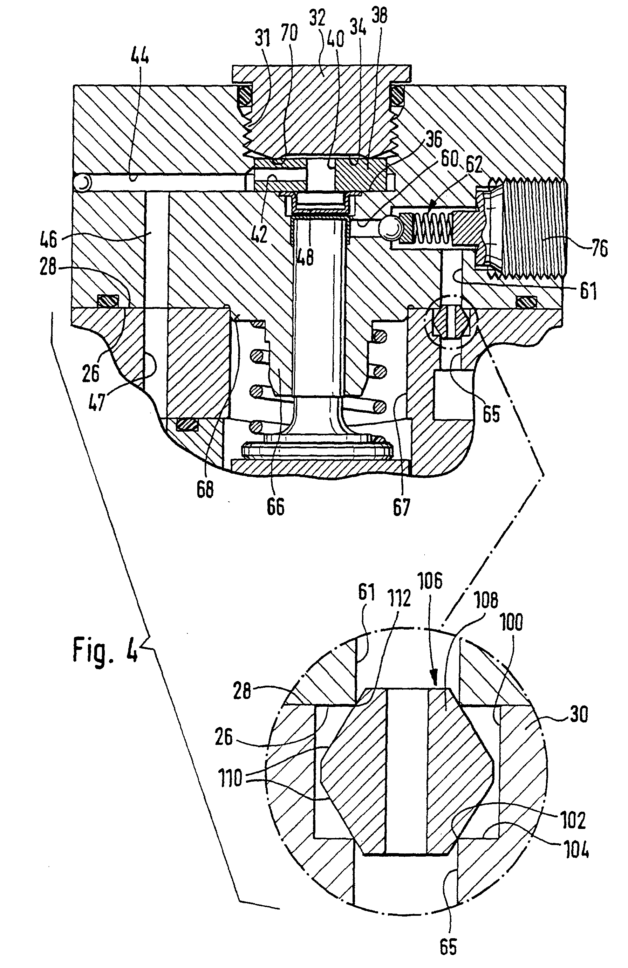

- Figur 4: einen Ausschnitt aus Figur 2 in vergrößerter Darstellung mit einer Detaildarstellung einer Hochdruckdichtstelle; und
- Figuren 5 bis 7: Schnittansichten weiterer Ausführungsformen von Hochdruckdichtstellen.

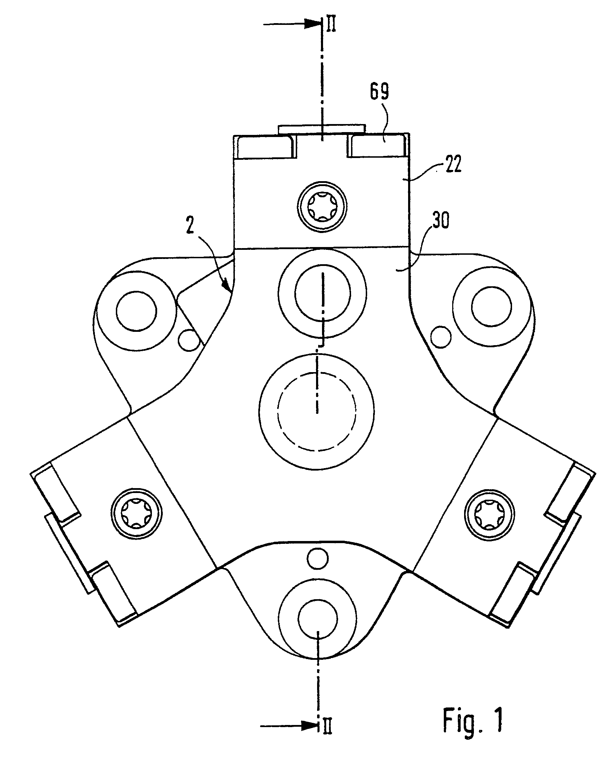

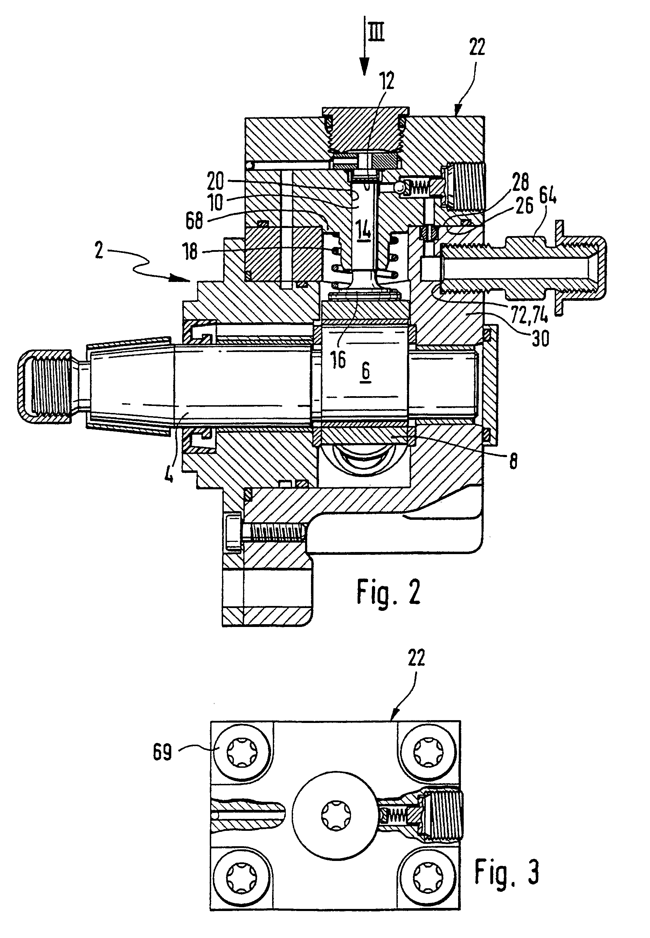

Die Figuren 1 und 2 zeigen eine Radialkolbenpumpe zur Kraftstoffhochdruckversorgung bei Kraftstoffeinspritzsystemen, insbesondere bei Common-Rail-Systemen, von Brennkraftmaschinen. Die Radialkolbenpumpe ist mit einer integrierten Bedarfsmengenregelung konzipiert. Als Regelkonzept wird das Prinzip der Saugdrosselregelung verfolgt. Die Kraftstoffzufuhr und Dimensionierung erfolgt über eine nicht dargestellte Zumesseinheit.

Die Radialkolbenpumpe umfasst eine in einem insgesamt mit dem Bezugszeichen 2 bezeichneten Pumpengehäuse gelagerte Antriebswelle 4 mit einem exzentrisch ausgebildeten Wellenabschnitt 6. Auf dem exzentrischen Wellenabschnitt 6 ist eine Ablaufbuchse 8 vorgesehen, gegenüber der der Wellenabschnitt 6 drehbar ist. Gegen die äußere Mantelfläche der Ablaufbuchse 8, die zylindrisch oder polygonal ausgebildet sein kann, stützen sich drei jeweils um 120° zueinander versetzt in radialer Richtung angeordnete Kolben 10 ab. Die Kolben 10 umfassen einen in einem Zylinderraum 12 geführten Stößel 14, an dessen der Antriebswelle 4 zugewandtem Ende ein tellerförmiger Anlageabschnitt 16 ausgebildet ist, mit dem der jeweilige Kolben 10 gegen die äußere Mantelfläche der Ablaufbuchse 8 unter Vorspannung einer Feder 18 abgestützt ist. Der Zylinderraum 12 eines jeweiligen Stößels 14 wird von einen radial zur Antriebswelle 4 verlaufenden Durchgangsöffnung 20 und einem radial in diesen Durgangsöffnung beweglichen Pumpenkolben 10 in einem radial äußeren Gehäuseteil 22 gebildet. Das Gehäuseteil 22 ist im Wesentlichen blockförmig und weist eine der Antriebswelle 4 zugewandte zur Längsrichtung der Durchgangsöffnung 20 senkrecht verlaufende Anlagefläche 26 auf, mit der das Gehäuseteil 22 gegen eine gleichfalls ebene von der Antriebswelle 4 radial nach außen abgewandte Anlagefläche 28 eines Gehäusegrundkörpers 30 anliegt.

In einen durchmessererweiterten radial äußeren Endabschnitt 31 der Durchgangsöffnung 20 ist ein als Verschlussschraube ausgebildetes Verschlusselement 32 dichtend eingeschraubt.

Zwischen der Stirnseite 34 des Verschlusselements 32 und einer axialen Stufe 36 in der Durchgangsöffnung 20 ist ein scheibenförmiges Element 38 mit einer zentralen Öffnung 40 und mit mindestens einer von der zentralen Öffnung 40 ausgehenden radialen Öffnung 42 eingesetzt. Die radiale Öffnung 42 kommuniziert mit einer Kraftstoffzuführöffnung 44 und 46 in dem Gehäuseteil 22, welche in der Anlagefläche 26 des Gehäuseteils 22 mündet und mit einer weiteren Zuführöffnung 47 in dem Gehäusegrundkörper 30 fluchtet. Ein ansaugseitiges Rückschlagventil 48 ist auf der pumpenkolbenzugewandten Seite des scheibenförmigen Elements 38 vorgesehen. Es umfasst eine topfförmige Halterung, in der eine Druckfeder untergebracht ist, die einen scheibenförmigen Ventilkörper gegen die zentrale Öffnung 40 in dem Scheibenelement 38 vorspannt.

Von dem Zylinderraum 12 führt eine Kraftstoffabführöffnung 60 weg, in der ein hochdruckseitiges Rückschlagventil 62 untergebracht ist und die in eine weitere Kraftstoffabführöffnung 61 führt, welche ebenfalls in der Anlagefläche 26 des Gehäuseteils 22 mündet und mit einer weiteren zu einem Hochdruckstutzen 64 führenden Abführöffnung 65 fluchtet. Die Abführleitung 65 umfasst einen erweiterten Mündungsbereich 100, in Form einer abgestuften Bohrung in dem Gehäusegruridkörper 30. Die Abführöffnung 65 ist daher von einer umlaufenden Kante 102 der axialen Stufe 104 umgeben. In den erweiterten Mündungsbereich 100 ist ein Hochdruckdichtelement 106 in Form eines Doppelkegeldichtelements 108 eingesetzt. Das Doppelkegeldichtelement 108 umfasst zwei kegelig verlaufende Dichtflächen 110, gegen welche die umlaufende Kante 102 und eine die Kraftstoffabführöffnung 61 in der Anlagefläche 26 umgebende umlaufende Kante 112 anliegen. Das Gehäuseteil 22 ist über Schrauben 69 (Figur 3) gegen den Gehäusegrundkörper 30 derart angezogen, dass sich die umlaufenden Kanten 102 und 112 in die kegeligen Dichtflächen 110 des Doppelkegeldichtelements 108 eingraben und hierdurch eine Hochdruckabdichtung bewirken.

Das Gehäuseteil 22 umfasst einen zur Antriebswelle 4 vorspringenden und zum Zylinderraum 12 konzentrischen Abschnitt 66, der in eine radiale Öffnung 67 in dem Gehäusegrundkörper 30 eingreift. Am Übergang von der Anlagefläche 26 zu dem Abschnitt 66 ist ein Zentrierbund 68 vorgesehen, mit dem das Gehäuseteil 22 in der radialen Öffnung 67 positioniert ist. Das Gehäuseteil 22 ist wie vorstehend erwähnt gegen den Gehäusegrundkörper 30 derart angezogen, dass die Anlagefläche 26 des Gehäuseteils 22 und die Anlagefläche 28 des Gehäusegrundkörpers 30 flächenhaft aneinander anliegen und eine Abdichtung der miteinander fluchtenden Kraftstoffzuführöffnungen 46 und 47 bewirken. Auf diese Weise ist im montierten Zustand der Radialkolbenpumpe eine statisch genau definierte Lage des Gehäuseteils 22 am Gehäusegrundkörper 30 erreicht, und sämtliche Hochdruckdichtstellen sind dadurch voneinander entkoppelt. Da die Rückschlagventile 48,62 in dem radial äußeren Gehäuseteil 22 untergebracht sind, ist dieses Gehäuseteil als Baugruppe vormontierbar und gesondert druckprüfbar.

Die Abdichtung des durchmessererweiterten radial äußeren Endabschnitts 31 der Durchgangsöffnung 20 durch das eingeschraubte Verschlusselement 32 erfolgt dadurch, dass an der Stirnseite 34 des Verschlusselements 32 eine um die zentrale Öffnung 40 in dem Scheibenelement 38 umlaufende sickenförmige Erhebung 70, eine sogenannte Beisskante, vorgesehen ist, die sich beim Anziehen des Verschlusselements 32 in das Metall des Scheibenelements 38 "eingräbt". Hierdurch wird das Scheibenelement 38 mit seiner gegenüberliegenden Seite derart gegen die axiale hartgedrehte Stufe 36 gedrückt, dass auch dort eine Hochdruckabdichtung erzielt wird.

In entsprechender Weise ist auch an der Stirnseite 72 des Hochdruckstutzens 64 eine Beisskante 74 ausgebildet. Auch eine Verschlussschraube 76, welche eine Montage- und Zugangsöffnung zu dem hochdruckseitigen Rückschlagventil 62 verschließt, ist mit einer Beisskante gegen eine Stufe angezogen.

Bei Umdrehung der Antriebswelle 4 aus der in Figur 2 dargestellten Stellung wird der Kolben 10 unter Wirkung der Druckfeder 18 aus dem Zylinderraum 12 herausbewegt. Hierdurch sinkt der Druck im Zylinderraum, und bei Unterschreiten eines Öffnungsdrucks öffnet das ansaugseitige Rückschlagventil 48, so dass Kraftstoff über die Zuführöffnung 46, 44, 42, 40 in den Zylinderraum angesaugt wird. Beim anschließenden Verdichtungshub schließt das Rückschlagventil 48 und das hochdruckseitige Rückschlagventil 62 öffnet, so dass unter Hochdruck stehender Kraftstoff über die Abführöffnung 60, 61, 65 zum Hochdruckstutzen 64 gefördert werden kann.

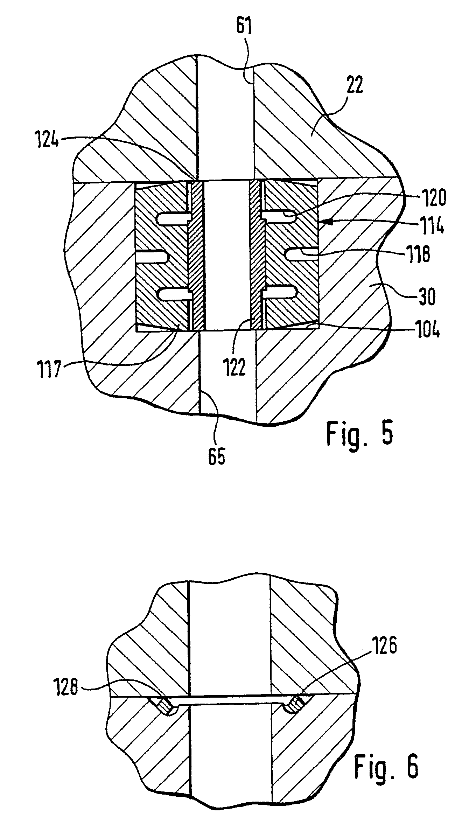

Figur 5 zeigt eine weitere Ausführungsform eines buchsenförmigen Hochdruckdichtelements 114. Dieses Hochdruckdichtelement 114 ist in axialer Richtung 116 begrenzt nachgiebig also deformierbar ausgebildet. Es umfasst eine äußere und eine innere Dichthülse 117 und 122. In der inneren und der äußeren Fläche der äußeren Dichthülse 117 sind in radialer Richtung sowie in Umfangsrichtung erstreckte Ausnehmungen 118 bzw. 120 vorgesehen. Die innere Dichthülse 122 ist mit ihren axialen Stirnseiten 124 einerseits gegen die Anlagefläche 26 des Gehäusebauteils 22 und andererseits gegen die axiale Stufe 104 des erweiterten Mündungsbereichs 100 abstützt. Beim Anziehen des Gehäuseteils 22 gegen den Gehäusegrundkörper 30 wird die Innen- und Außenhülse des Hochdruckdichtelements 114 in axialer Richtung deformiert. Hierdurch wird eine harte metallische Abdichtung der Kraftstoffabführöffnungen 61 und 65 nach außen bewirkt.

Figur 6 zeigt ein ringförmiges Hochdruckdichtelement 126, das im Querschnitt polygonal ausgebildet ist und eine scharfe kreisförmige Dichtkante 128 aufweist.

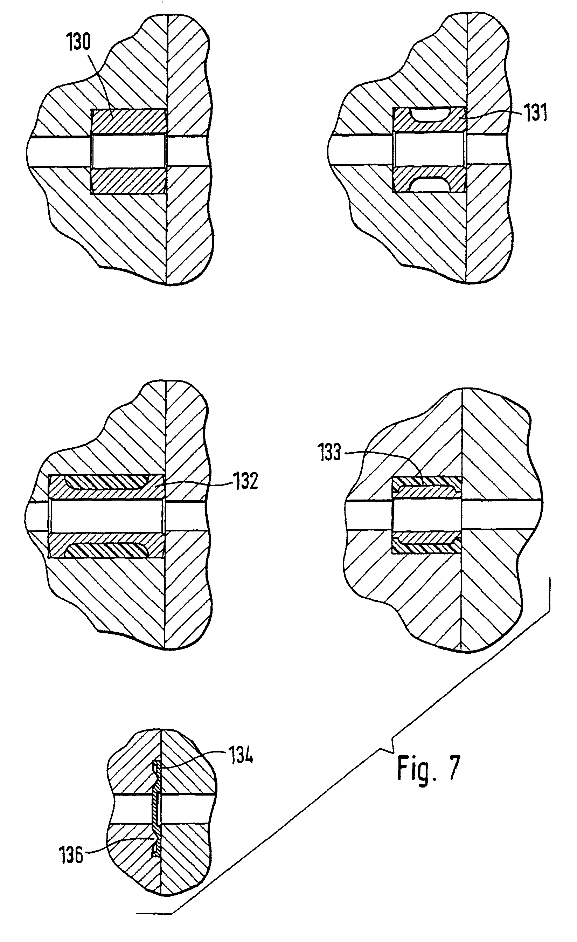

Figur 7 zeigt weitere Ausführungsformen von buchsenförmigen Hochdruckdichtelementen 130, 131, 132, 133 sowie eines scheibenförmigen Hochdruckdichtelements 134, welch letzteres mit einer umlaufenden sickenförmigen Erhebung 136 zusammenwirkt, welche die abzudichtende Öffnung kreisförmig umgibt.

## Patentansprüche

1. Radialkolbenpumpe zur Kraftstoffhochdruckversorgung bei Kraftstoffeinspritzsystemen von Brennkraftmaschinen, insbesondere bei einem Common-Rail-Einspritzsystem, mit einer in einem Pumpengehäuse (2) gelagerten Antriebswelle (4), die exzentrisch ausgebildet ist oder in Umfangsrichtung mehrere nockenartige Erhebungen aufweist, und mit vorzugsweise mehreren bezüglich der Antriebswelle radial in einem jeweiligen Zylinderraum (12) angeordneten Kolben (10), die bei Umdrehen der Antriebswelle (4) in dem Zylinderraum in radialer Richtung hin- und her bewegbar sind, und mit Rückschlagventilen (48, 62) auf der Ansaugseite und der Hochdruckseite, wobei für jeden Kolben (10) ein den jeweiligen Zylinderraum (12) bildendes metallisches Gehäuseteil (22) mit einer Kraftstoffansaugöffnung (44, 46) und einer Kraftstoffabführöffnung (60, 61) vorgesehen ist, wobei das Gehäuseteil (22) bezüglich der Antriebswelle (4) von radial außen mit ebener Anlagefläche (26) gegen eine ebene Anlagefläche (28) des metallischen Gehäusegrundkörpers (30) anliegt und ein vorspringender zum Zylinderraum (12) konzentrischer antriebswellenzugewandter Abschnitt (66) des Gehäuseteils (22) sich durch eine radiale Öffnung (67) des Gehäusegrundkörpers (30) hindurch in Richtung auf die Antriebswelle (4) erstreckt, mit einer weiteren Abführöffnung (65) in dem Gehäusegrundkörper (30), wobei die Kraftstoffabführöffnung (61) in der ebenen Anlagefläche (26) und die weitere Abführöffnung (65) in der Anlagefläche (28) mündet und wobei in einem erweiterten Mündungsbereich (100) der Kraftstoffabführöffnung (61) in dem Gehäuseteil (22) und/oder in einem erweiterten Mündungsbereich (100) der weiteren Abführöffnung (65) im Gehäusegrundkörper (30) ein Hochdruckdichtelement vorgesehen ist, **dadurch gekennzeichnet, dass** die Kraftstoffabführöffnung (61) und die weitere Abführöffnung (65) fluchtend angeordnet sind, dass das Hochdruckdichtelement als metallisches Hochdruckdichtelement (106, 114, 126, 130-134) ausgeführt ist, und dass das Gehäuseteil (22) unter Zwischenordnung des metallischen Hochdruckdichtelements über Schrauben (68) derart gegen den Gehäusegrundkörper (30) angezogen ist, dass durch Klemmung des Hochdruckdichtelements eine Abdichtung der Hochdruckseite erreicht wird.

2. Radialkolbenpumpe nach Anspruch 1, **dadurch gekennzeichnet, dass** das Hochdruckdichtelement (106) ein Doppelkegeldichtelement (108) ist.

3. Radialkolbenpumpe nach Anspruch 2, **dadurch gekennzeichnet, dass** die jeweilige Öffnung (61, 65) oder einen Öffnungsabschnitt umgebende Kanten (102, 112) dichtend gegen die kegelförmigen Flächen (110) des Doppelkegeldichtelements (108) anliegen.

4. Radialkolbenpumpe nach Anspruch 1, **dadurch gekennzeichnet dass** das Hochdruckdichtelement (126) ringförmig ausgebildet ist und eine Dichtkante (128) umfasst.

5. Radialkolbenpumpe nach Anspruch 1, **dadurch gekennzeichnet, dass** das Hochdruckdichtelement (114, 130-133) im wesentlichen buchsenförmig ausgebildet ist und mit seinen Stirnseiten (124) die Öffnungen (61, 65) umgebend eine harte Abdichtung bewirkt.

6. Radialkolbenpumpe nach Anspruch 5, **dadurch gekennzeichnet, dass** das Hochdruckdichtelement (114) eine Innenhülse (122) und eine Außenhülse (117) umfasst.

7. Radialkolbenpumpe nach Anspruch 5 oder 6, **dadurch gekennzeichnet, dass** das buchsenförmige Hochdruckdichtelement (114, 131, 132) in axialer Richtung nachgiebig ausgebildet ist.

8. Radialkolbenpumpe nach Anspruch 7, **dadurch gekennzeichnet, dass** das buchsenförmige Hochdruckdichtelement (114, 131, 132) in radialer Richtung sowie in Umfangsrichtung erstreckte Ausnehmungen (118, 120) aufweist.

9. Radialkolbenpumpe nach einem der Ansprüche 5 bis 8, **dadurch gekennzeichnet, dass** an den Stirnseiten des buchsenförmigen Hochdruckdichtelements (114, 130, 131, 132) eine Dichtkante oder eine sickenförmig umlaufende Erhebung ausgebildet ist, die beim Anziehen der Bauteile gegeneinander eine Hochdruckabdichtung bewirkt.

10. Radialkolbenpumpe nach einem oder mehreren der vorstehenden Ansprüche, **dadurch gekennzeichnet, dass** alle mit Hochdruck beaufschlagten Dichtstellen von gegeneinander angezogenen metallischen Bauteilen (22, 30; 32, 38; 64) ohne Zwischenordnung elastomerer Dichtungselemente gebildet sind.

11. Radialkolbenpumpe nach einem oder mehreren der vorstehenden Ansprüche, **dadurch gekennzeichnet, dass** der vorspringende antriebswellenzugewandte Abschnitt (66) des Gehäuseteils (22) einen Zentrierbund (68) bildet, mit dem das Gehäuseteil (22) in der radialen Öffnung (67) des Gehäusegrundkörpers (30) positionierbar ist.

12. Radialkolbenpumpe nach einem oder mehreren der vorstehenden Ansprüche, **dadurch gekennzeichnet, dass** das ansaugseitige und das hochdruckseitige Rückschlagventil (48, 62) in das Gehäuseteil (22) integriert sind.

13. Radialkolbenpumpe nach einem der vorstehenden Ansprüche, **dadurch gekennzeichnet, dass** das Gehäuseteil (30) eine den Zylinderraum (12) bildende zur Antriebswelle (4) radial verlaufende Durchgangsöffnung (20) aufweist, die radial außen von einem metallischen Verschlußelement (32), das in die Durchgangsöffnung (20) eingeschraubt ist, verschlossen ist.

14. Radialkolbenpumpe nach Anspruch 13, **dadurch gekennzeichnet, dass** das metallische Verschlußelement (32) mit seiner Stirnseite (34) gegen eine axiale Stufe (36) in der Durchgangsöffnung (20) derart angezogen ist, dass eine hochdruckdichte Abdichtung bewirkt wird.

15. Radialkolbenpumpe nach Anspruch 14, **dadurch gekennzeichnet, dass** an der Stirnseite (34) des Verschlußelements (32) eine kantige oder sickenförmige umlaufende Erhebung (70) ausgebildet ist, die beim Anziehen der Bauteile gegeneinander zu einer Hochdruckabdichtung führt.

16. Radialkolbenpumpe nach einem oder mehreren der vorstehenden Ansprüche, **dadurch gekennzeichnet, dass** an einer der gegeneinander anliegenden Dichtflächen der metallischen Bauteile (32, 38, 22; 64, 30; 76, 22) eine kantige oder sickenförmige Erhebung (70, 74) ausgebildet ist, die beim Anziehen der Bauteile gegeneinander zu einer Hochdruckabdichtung führt.

## Claims

1. Radial piston, for fuel high-pressure supply in fuel injection systems of internal combustion engines, in particular in a common-rail injection system, with the drive shaft (4) which is mounted in a pump casing (2) and which is designed eccentrically or has a plurality of cam-like elevations in a circumferential direction, and with preferably a plurality of pistons (10) which are arranged in a respective cylinder space (12) radially with respect to the drive shaft and which, during the rotation of the drive shaft (4), are movable back and forth in the radial direction in the cylinder space, and with non-return valves (48, 62) on the intake side and the high-pressure side, there being provided for each piston (10) a metallic housing part (22) forming the respective cylinder space (12) and having a fuel intake orifice (44, 46) and a fuel discharge orifice (60, 61), the housing part (22) bearing with a planar bearing surface (26) radially from outside with respect to the drive shaft (4) against a planar bearing surface (28) of the metallic housing basic body (30), and a projecting portion (66) of the housing part (22), the said portion being concentric to the cylinder space (12) and facing the drive shaft, extending through a radial orifice (67) of the housing basic body (30) in the direction of the drive shaft (4), with a further discharge orifice (65) in the housing basic body (30), the fuel discharge orifice (61) issuing in the planar bearing surface (26) and the further discharge orifice (65) issuing in the bearing surface (28), and a high-pressure sealing element being provided in a widened issue region (100) of the fuel discharge orifice (61) in the housing part (22) and/or in a widened issue region (100) of the further discharge orifice (65) in the housing basic body (30), **characterized in that** the fuel discharge orifice (61) and the further discharge orifice (65) are arranged in alignment, **in that** the high-pressure sealing element is designed as a metallic high-pressure sealing element (106, 114, 126, 130-134), and **in that** the housing part (22) is drawn up against the housing basic body (30) via screws (68), with the metallic high-pressure sealing element interposed, in such a way that a sealing-off of the high-pressure side is achieved as a result of the clamping of the high-pressure sealing element.

2. Radial piston pump according to Claim 1, **characterized in that** the high-pressure sealing element (106) is a double-conical sealing element (108)

3. Radial piston pump according to Claim 2, **characterized in that** edges (102, 112) surrounding the respective orifice (61, 65) or an orifice portion bear sealingly against the conical surfaces (110) of the double-conical sealing element (108).

4. A radial piston pump according to Claim 1, **characterized in that** the high-pressure sealing element (126) is of annular design and comprises a sealing edge (128).

5. Radial piston pump according to Claim 1, **characterized in that** the high-pressure sealing element (114, 130-133) is of essentially bush-like design and with its end faces (124) has the effect of a hard sealing-off around the orifices (61, 65).

6. Radial piston pump according to Claim 5, **characterized in that** the high-pressure sealing element (114) comprises an inner sleeve (122) and an outer sleeve (117).

7. Radial piston pump according to Claim 5 or 6, **characterized in that** the bush-shaped high-pressure sealing element (114, 131, 132) is designed resiliently in the axial direction.

8. Radial piston pump according to Claim 7, **characterized in that** the bush-shaped high-pressure sealing element (114, 131, 132) has recesses (118, 120) extended in the radial direction and in the circumferential direction.

9. Radial piston pump according to one of Claims 5 to 8, **characterized in that** the end faces of the bush-shaped high-pressure sealing element (114, 130, 131, 132) has formed on them a sealing edge or a beadily continuous elevation which has the effect of a high-pressure sealing-off when the components are drawn up against one another.

10. Radial piston pump according to one or more of the preceding claims, **characterized in that** all the sealing points, acted upon by high pressure, of metallic components (22, 30; 32, 38; 64) drawn up against one another are formed, without elastomeric sealing elements being interposed.

11. Radial piston pump according to one or more of the preceding claims, **characterized in that** the projecting portion (66) of the housing part (22), the said portion facing the drive shaft, forms a centring collar (68), by means of which the housing part (22) can be positioned in the radial orifice (67) of the housing basic body (30).

12. Radial piston pump according to one or more of the preceding claims, **characterized in that** the intake-side and the high-pressure-side non-return valve (48, 62) are integrated into the housing part (22).

13. Radial piston pump according to one of the preceding claims, **characterized in that** the housing part (30) has a passage orifice (20) which forms the cylinder space (12) and runs radially to the drive shaft (4) in which is closed radially on the outside by a metallic closing element (32) which is screwed into the passage orifice (20).

14. Radial piston pump according to Claim 13, **characterized in that** the metallic closing element (32) is drawn with its end face (34) up against an axial step (36) in the passage orifice (20), in such a way that a high-pressure sealing-off tight to high pressure is brought about.

15. Radial piston pump according to Claim 14, **characterized in that** an edge-like or bead-shaped continuous elevation (70) is formed on the end face (34) of the closing element (32) and, when the components are drawn up against one another, lead to a high-pressure sealing-off.

16. Radial piston pump according to one or more of the preceding claims, **characterized in that** an edge-like or bead-shaped elevation (70, 74) is formed on one of the mutually bearing sealing surfaces of the metallic components (32, 38, 22; 64, 30; 76, 22) and, when the components are drawn up against one another, lead to a high-pressure sealing-off.

## Revendications

1. Pompe à pistons radiaux pour l'alimentation à haute pression en carburant dans des systèmes d'injection de carburant de moteurs à combustion interne, en particulier dans un système d'injection par rampe commune (Common Rail), avec un arbre de commande (4) monté dans un boîtier de pompe (2), qui est excentrique ou qui présente dans le sens périphérique plusieurs excroissances en forme de cames, et avec de préférence plusieurs pistons (10) disposés radialement par rapport à l'arbre de commande dans une chambre de cylindre respective (12), qui sont animés d'un mouvement de va et vient en direction radiale lors de la rotation de l'arbre de commande (4), et avec des soupapes anti-retour (48, 62) sur le côté d'aspiration et sur le côté à haute pression, dans laquelle pour chaque piston (10) une partie de boîtier (22) métallique formant la chambre de cylindre respective (12) est prévue avec un orifice d'aspiration de carburant (44, 46) et un orifice de sortie de carburant (60, 61), la partie de boîtier (22) repose radialement par l'extérieur par rapport à l'arbre de commande (4) par une surface d'appui plane (26) contre une surface d'appui plane (28) du corps de base métallique du boîtier (30), et une partie saillante (66) de la partie de boîtier (22), tournée vers l'arbre de commande (4) et concentrique à la chambre de cylindre (12), s'étend à travers une ouverture radiale (67) du corps de base du boîtier (30), avec un autre orifice de sortie (65) dans le corps de base du boîtier (30), l'orifice de sortie de carburant (61) débouchant dans la surface d'appui plane (26) et l'autre orifice de sortie (65) débouchant dans la surface d'appui (28), et un élément d'étanchéité à haute pression est prévu dans une région élargie (100) de l'embouchure de l'orifice de sortie de carburant (61) dans la partie de boîtier (22) et/ou dans une région élargie (100) de l'embouchure de l'autre orifice de sortie (65) dans le corps de base du boîtier (30),
**caractérisée en ce que**
l'orifice de sortie de carburant (61) et l'autre orifice de sortie (65) sont disposés en alignement, l'élément d'étanchéité à haute pression est un élément d'étanchéité à haute pression en métal (106, 114, 126, 130-134), et la partie de boîtier (22) est serrée contre le corps de base du boîtier (30), avec interposition de l'élément d'étanchéité à haute pression en métal, au moyen de vis (68), de façon à obtenir une étanchéité du côté à haute pression par le serrage de l'élément d'étanchéité à haute pression.

2. Pompe à pistons radiaux selon la revendication 1,
**caractérisée en ce que**
l'élément d'étanchéité à haute pression (106) est un élément d'étanchéité à double cône (108).

3. Pompe à pistons radiaux selon la revendication 2,
**caractérisée en ce que**
l'orifice respectif (61, 65) ou des arêtes (102, 112) entourant une partie d'orifice s'appliquent hermétiquement contre les surfaces coniques (110) de l'élément d'étanchéité à double cône (108).

4. Pompe à pistons radiaux selon la revendication 1,
**caractérisée en ce que**
l'élément d'étanchéité à haute pression (126) est de forme annulaire et comprend une arête d'étanchéité (128).

5. Pompe à pistons radiaux selon la revendication 1,
**caractérisée en ce que**
l'élément d'étanchéité à haute pression (114, 130-133) a essentiellement la forme d'une douille et assure par ses faces d'extrémité (124) une étanchéité dure en entourant les orifices (61, 65).

6. Pompe à pistons radiaux selon la revendication 5,
**caractérisée en ce que**
l'élément d'étanchéité à haute pression (114) comprend une douille intérieure (122) et une douille extérieure (117).

7. Pompe à pistons radiaux selon la revendication 5 ou 6,
**caractérisée en ce que**
l'élément d'étanchéité à haute pression en forme de douille (114, 131, 132) est souple en direction axiale.

8. Pompe à pistons radiaux selon la revendication 7,
**caractérisée en ce que**
l'élément d'étanchéité à haute pression en forme de douille (114, 131, 132) présente des évidements (118, 120) s'étendant en direction radiale et en direction périphérique.

9. Pompe à pistons radiaux selon l'une quelconque des revendications 5 à 8,
**caractérisée en ce que**
sur les faces frontales de l'élément d'étanchéité à haute pression en forme de douille (114, 130, 131, 132) est formée une arête d'étanchéité ou une surélévation périphérique en forme de moulure, qui assure une étanchéité à haute pression lors du serrage des pièces l'une contre l'autre.

10. Pompe à pistons radiaux selon une ou plusieurs des revendications précédentes,
**caractérisée en ce que**
tous les points soumis à la haute pression des pièces métalliques serrées les unes contre les autres (22, 30; 32, 38; 64) sont formés sans interposition d'éléments d'étanchéité en élastomère.

11. Pompe à pistons radiaux selon une ou plusieurs des revendications précédentes,
**caractérisée en ce que**
la partie saillante (66) de la partie de boîtier (22), tournée vers l'arbre de commande, forme un bourrelet de centrage (68), avec lequel la partie de boîtier (22) peut être positionnée dans l'ouverture radiale (67) du corps de base du boîtier (30).

12. Pompe à pistons radiaux selon une ou plusieurs des revendications précédentes,
**caractérisée en ce que**
les soupapes anti-retour du côté d'aspiration et du côté à haute pression (48, 62) sont intégrées dans la partie de boîtier (22).

13. Pompe à pistons radiaux selon l'une quelconque des revendications précédentes,
**caractérisée en ce que**
la partie de boîtier (30) présente une ouverture traversante (20) radiale par rapport à l'arbre de commande (4) et formant la chambre de cylindre (12), qui est fermée radialement vers l'extérieur par un élément de fermeture métallique (32), qui est vissé dans l'ouverture traversante (20).

14. Pompe à pistons radiaux selon la revendication 13,
**caractérisée en ce que**
l'élément de fermeture métallique (32) est serré avec une face frontale (34) contre un échelon axial (36) dans l'ouverture traversante (20), de façon à assurer une étanchéité résistant à la haute pression.

15. Pompe à pistons radiaux selon la revendication 14,
**caractérisée en ce que**
sur la face frontale (34) de l'élément de fermeture (32), est formée une surélévation périphérique (70) en forme d'arête ou de moulure, qui conduit à une étanchéité à haute pression lors du serrage des pièces l'une contre l'autre.

16. Pompe à pistons radiaux selon une ou plusieurs des revendications précédentes,
**caractérisée en ce que**
sur une des surfaces d'étanchéité appliquées l'une contre l'autre des pièces métalliques (32, 38, 22; 64, 30; 76, 22), est formée une surélévation en forme d'arête ou de moulure (70, 74), qui conduit à une étanchéité à haute pression lors du serrage des pièces l'une contre l'autre.
